# EUROPÄISCHE PATENTSCHRIFT

(11) **EP 1 353 080 B1**
(45) Veröffentlichungstag und Bekanntmachung des Hinweises auf die Patenterteilung: **31.08.2005**
(21) Anmeldenummer: 03007093.2
(22) Anmeldetag: 28.03.2003
(51) Int. Cl.: F16B 31/02

(54) **Drehmomentbegrenzungselement für Spreizanker**
Torque-limiting element for expansion dowell
Elément à limitation de couple intrinsèque pour un goujon expansible

(30) Priorität: 10.04.2002 DE 20205489 U
(43) Veröffentlichungstag der Anmeldung: 15.10.2003
(73) Patentinhaber: fischerwerke Artur Fischer GmbH & Co. KG, 72178 Waldachtal (DE)
(72) Erfinder: Frischmann, Albert, 79341 Kenzingen (DE)

(56) Entgegenhaltungen:
- US-A- 4 068 555
- US-A- 4 144 796

## Beschreibung

Die Erfindung betrifft ein Drehmomentbegrenzungselement für Spreizanker mit den Merkmalen des Oberbegriffs des Anspruchs 1.

Beim Setzen von Spreizankern, die eine Spreizhülse und einen mittels einem Gewindebolzen einziehbaren Spreizkörper aufweisen, ist die Einhaltung eines bestimmten Drehmoments beim Anziehen des Gegenlagers von entscheidender Bedeutung. Dabei kann das Gegenlager entweder ein am Gewindebolzen fest angebrachter Schraubenkopf mit Angriffsflächen oder eine auf den Gewindebolzen aufgeschraubte Mutter sein. In beiden Fällen stützt sich das Gegenlager auf dem Befestigungsgegenstand ab. Im ersten Fall wird der Spreizkörper durch Eindrehen des Gewindebolzens in die Spreizhülse eingezogen, während im zweiten Fall Spreizkörper und Gewindebolzen einstückig sind und gemeinsam durch die Mutter axial verschoben werden, wodurch es zum Einziehen des Spreizkörpers in die Spreizhülse kommt.

Über die Einstellung eines exakten Drehmoments werden die Spreizkräfte der Spreizhülse auf den Ankergrund gesteuert. Sind diese Kräfte zu gering, kommt es zu einem verminderten Reibschluss, wodurch die mögliche Belastung herabgesetzt wird. Sind die Kräfte zu hoch, kann es zur Beschädigung des Ankergrundes und in der Folge zu einem Ausbrechen des Spreizankers kommen. Zur Einhaltung des vorgeschriebenen Drehmomentes können Drehmomentschlüssel verwendet werden. Da Drehmomentschlüssel auf Baustellen häufig nicht zur Hand sind und es häufig zu Bedienfehlem kommt, ist im Stand der Technik bekannt, ein Drehmomentbegrenzungselement für Spreizanker zu verwenden. Der Bediener bringt ein Drehmoment mit einem gewöhnlichen Schraubenschlüssel oder dgl. auf das Drehmomentbegrenzungselement des vorbestimmten Drehmoments auf, welches das Drehmoment auf das Gegenlager überträgt. Bei Erreichen des vorbestimmten Drehmoments wird die Drehmomentübertragung durch das Drehmomentbegrenzungselement unterbrochen. Damit ist eine einfache Einhaltung des vorgeschriebenen Drehmoments gewährleistet.

DE 40 37 963 A1 schlägt ein derartiges Drehmomentbegrenzungselemente vor. Dabei ist das Drehmomentbegrenzungselement kappenförmig ausgebildet und weist eine der Außenkontur des Gegenlagers entsprechende Kontur auf. Es besteht aus einem elastisch und/oder plastisch verformbaren Material. Beim Erreichen des vorbestimmten Drehmoments verformt sich das Drehmomentbegrenzungselement derart, dass es zu einem Durchdrehen gegenüber dem Gegenlager und damit zu einer Unterbrechung der Drehmomentübertragung kommt. Problematisch ist hierbei die exakte Einstellung des vorgeschriebenen, begrenzenden Drehmoments über Geometrie und stoffliche Zusammensetzung des Drehmomentbegrenzungselementes sowie Toleranzabweichungen zwischen der Innenkontur des Drehmomentbegrenzungselements und der Außenkontur des Gegenlagers.

Ein vergleichbares Drehmomentbegrenzungselement ist bekannt aus der US-A-4,068,555. Das Drehmomentbegrenzungselement ist fest auf eine Mutter aufgesetzt. Zur formschlüssigen Drehmomentübertragung weist die Mutter ein Vielzahn-Außenprofil und das Drehmomentbegrenzungselement ein komplementäres Vielzahn-Innenprofil auf. Zum Ansetzen eines Gabelschlüssels oder dgl. Werkzeug weist das Drehmomentbegrenzungselement eine Sechskant auf. Das Drehmomentbegrenzungselement besteht aus einem Werkstoff mit geringerer Scherfestigkeit als die Mutter, beispielsweise besteht die Mutter aus Stahl und das Drehmomentbegrenzungselement aus Kunststoff. Wird beim Festziehen der Mutter mit dem Drehmomentbegrenzungselement ein Grenzdrehmoment überschritten, scheren die Zähne des Vielzahn-Innenprofils des Drehmomentbegrenzungselements ab. Das bekannte Drehmomentbegrenzungselement hat den Nachteil, dass es eine spezielle Mutter mit einem zum Innenprofil des Drehmomentbegrenzungselements komplementären Außenprofil benötigt und ein Drehmomentbegrenzungselement aus einem Werkstoff geringerer Scherfestigkeit voraussetzt. Weiterer Nachteil des bekannten Drehmomentbegrenzungselements ist, dass die Mutter keine Standardkontur, beispielsweise einen Mehrkant, zum Ansetzen eines Gabelschlüssels oder dgl. Werkzeug aufweist. Die Mutter ist nach dem Festziehen und Abscheren des Drehmomentbegrenzungselements mit üblichen Mitteln nicht mehr lösbar.

Bekannt ist darüber hinaus aus DE 26 35 805 C2 ein Drehmomentbegrenzungselement, das mit dem Gegenlager über Scherstifte verbunden ist. Bei Erreichen des vorbestimmten Drehmoments scheren die Scherstifte ab, so dass sich das Drehmomentbegrenzungselement frei gegenüber dem Gegenlager drehen kann. Nachteilig hieran ist, dass blanke Trennstellen an den im Gegenlager verbleibenden Scherstiften entstehen, die eine Korrosion begünstigen. Dies stellt ein erhebliches Risiko bei sicherheitsrelevanten Befestigungen dar.

Der Erfindung liegt die Aufgabe zu Grunde, ein Drehmomentbegrenzungselement für Spreizanker zu schaffen, bei dem das begrenzende Drehmoment exakt eingestellt werden kann, bei dem keine abgescherten Elemente nach der Montage am Spreizanker verbleiben, und das mit Standard-Schraubenköpfen und -Muttern verwendbar ist.

Diese Aufgabe wird erfindungsgemäß durch die Merkmale des Anspruchs 1 gelöst. Das erfindungsgemäße Drehmomentbegrenzungselement ist kappenartig ausgebildet und weist Schlüsselflächen zur Übertragung eines Drehmoments durch ein bedienergeführtes Werkzeug auf. Entsprechend kann es sich bei den Schlüsselflächen beispielsweise um einen Außen- oder Innensechskant handeln. Die Innenkontur ist so gewählt, dass das Drehmomentbegrenzungselement auf das jeweilige Gegenlager aufsteckbar ist und einstückig Scherelemente mit entsprechend dimensionierten Sollbruchstellen aufweist. Diese treten zur Übertragung eines Drehmoments formschlüssig mit den Angriffsflächen des Gegenlagers in Kontakt und scheren bei Erreichen des vorbestimmten Drehmoments ab. Hierdurch wird die Übertragung des Drehmoments unterbrochen. Nach der Montage des Spreizankers kann das Drehmomentbegrenzungselement von Hand von dem Gegenlager abgenommen werden. Die Scherelemente fallen vom Gegenlager ab. Aufgrund der Einstückigkeit ergibt sich neben der Vermeindung blanker, korrosionsanfälliger Stellen ein Kostenvorteil gegenüber der Verwendung separater Scherstifte. Die Scherelemente des erfindungsgemäßen Drehmomentbegrenzungselements sind so angeordnet, dass sie formschlüssig mit Umfangsflächen eines Sechskants als Angriffsflächen des Gegenlagers in Kontakt treten. Das Drehmomentbegrenzungselement ist dadurch an Standard-Schraubenköpfen und -Muttern verwendbar.

Neben der beschriebenen Möglichkeit, das Drehmomentbegrenzungselement so zu gestalten, dass es nach erfolgter Montage des Spreizankers abnehmbar ist, kann es alternativ mit einer Verliersicherung ausgeführt werden. Dies ist für den Fall sinnvoll, dass ein nachträgliches Lösen oder Nachziehen des Spreizankers vermieden werden soll. Als Verliersicherung kann das Drehmomentbegrenzungselement beispielsweise mit einer Unterlegscheibe verstemmt sein, die das Gegenlager (Schraubenkopf oder Mutter) bauteilseitig formschlüssig umschließt.

In einer bevorzugten Ausführungsform sind die Scherelemente zylinderförmig ausgebildet. Der entstehende Übergang von Zylinder zum Grundkörper des Drehmomentbegrenzungselement bildet die Sollbruchstelle.

Im Kappendeckel des Drehmomentbegrenzungselements können Bohrungen eingebracht sein, die die visuelle Kontrolle der Sollbruchstellen erlauben. Auf diese Weise ist es dem Bediener möglich, zu kontrollieren, ob die Scherelemente korrekt im Eingriff sind und wann die Trennung der Scherelemente einsetzt. Sollte es wider Erwarten zu einer Verklemmung von Drehmomentbegrenzungselement und Gegenlager nach der Trennung der Scherelemente kommen, kann dies ebenfalls durch visuelle Kontrolle bemerkt werden, so dass die Gefahr eines zu hohen Drehmoments vermieden wird.

Für den Fall, dass der Spreizanker einen Gewindebolzen mit fest verbundenen Spreizkörper sowie einer Mutter als Gegenlager aufweist, sieht eine bevorzugte Ausführungsform des Drehmomentbegrenzungselements im Kappendeckel eine Durchgangsbohrung vor, aus der der Gewindebolzen beim Anziehen tritt.

Zur Zentrierung des Drehmomentbegrenzungselements auf dem Gegenlager können neben den Scherelementen im Inneren des Drehmomentbegrenzungselements Führungsrippen ausgeformt sein, die das Verdrehspiel verringern. Die Führungsrippen können ähnlich oder gleich ausgeformt sein wie die Scherelemente. Durch eine besonders enge Anordnung kann eine Klemmung zwischen Drehmomentbegrenzungselement und Gegenlager erreicht werden. Auf diese Weise kann das Drehmomentbegrenzungselement durch den Lieferanten vormontiert bereit gestellt werden.

Die Erfindung wird nachfolgend anhand zweier in der Zeichnung dargestellter Ausführungsbeispiele näher erläutert. Es zeigen:
- Figur 1: einen Längsschnitt eines Spreizankers mit aufgesetztem Drehmomentbegrenzungselement, und
- Figur 2 und 3: einen Querschnitt eines Spreizankers mit aufgesetztem Drehmomentbegrenzungselement und die entsprechende Draufsicht sowie

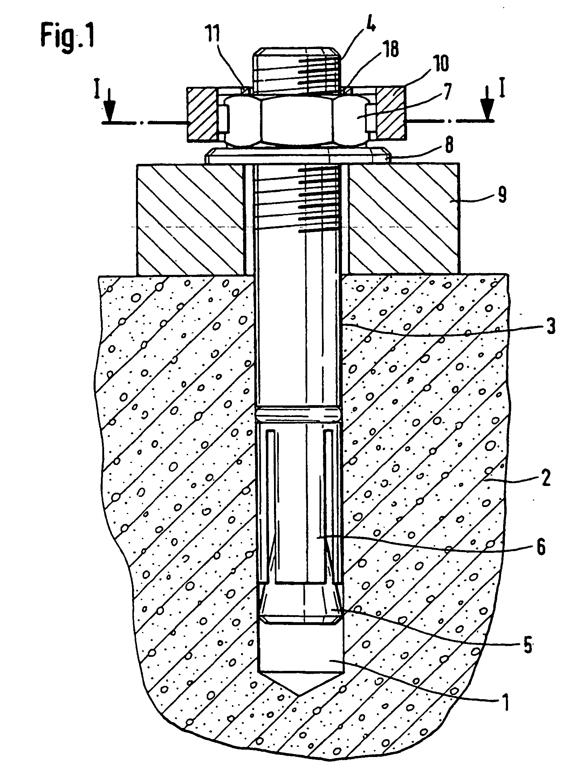

Figur 1 zeigt einen in ein Bohrloch 1 eines Bauteils 2 eingesetzten Spreizanker 3. Durch Einziehen des mit dem Gewindebolzen 4 fest verbundenen Spreizkörpers 5 in eine längsgeschlitzte Spreizhülse 6 wird der Spreizanker 3 im Bauteil 2 verankert. Das Einziehen des Spreizkörpers 5 erfolgt über eine Mutter 7 als Gegenlager, die sich über eine Unterlagscheibe 8 an dem zu befestigenden Gegenstand 9 abstützt. Über die Mutter 7 ist ein kappenartiges Drehmomentbegrenzungselement 10 mit einem auf der Stirnseite der Mutter 7 aufsitzenden Kappendeckel 11 aufgesetzt.

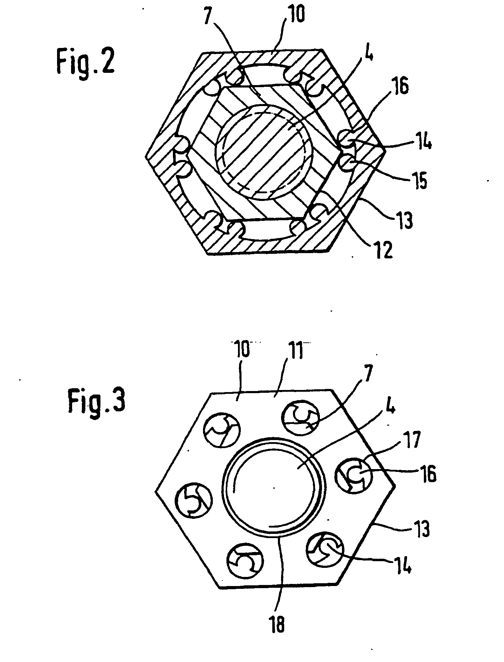

Figur 2 zeigt im Querschnitt das Drehmomentbegrenzungselement 10, den Gewindebolzen 4 sowie die darauf aufgeschraubte Mutter 7 mit einem Sechskant als Angriffsflächen 12. Das Drehmomentbegrenzungselement 10 weist als Außenkontur Schlüsselflächen 13 und an seiner Innenkontur paarweise angeordnete zylinderförmige Scherelemente 14 sowie gleichförmige Führungsrippen 15 auf. Der Abstand zwischen den Scherelementen 14 und den Führungsrippen 15 kann so gewählt werden, dass es zu einer Verklemmung von Drehmomentbegrenzungselement 10 und Mutter 7 kommt. Auf diese Weise kann das Drehmomentbegrenzungselement 10 bereits werksseitig vormontiert werden und ist ggf. nicht mehr von Hand abziehbar, so dass eine Montage ohne das Drehmomentbegrenzungselement 10 weitgehend ausgeschlossen ist. Beispielsweise durch einen manuell betätigten Schraubenschlüssel (nicht dargestellt) kann ein Drehmoment über die Schlüsselflächen 13 übertragen werden. Dieses Drehmoment wird über die Scherelemente 14 auf die Angriffsflächen 12 der Mutter 7 übertragen. Bei steigendem Drehmoment nehmen die Scherkräfte an den Sollbruchstellen 16 zu, bis es bei Erreichen des vorbestimmten Drehmoments zum Bruch kommt. Hierdurch wird die Drehmomentübertragung schlagartig unterbrochen, so dass dem Bediener das Erreichen des erforderlichen Drehmoments signalisiert wird. Das Drehmomentbegrenzungselement 10 kann im Weiteren von der Mutter 7 abgenommen werden, wodurch gleichzeitig die abgetrennten Scherelemente 14 abfallen.

Wie in Figur 3 in der Draufsicht dargestellt, kann der Bediener außerdem den korrekten Sitz der Mutter 7 im Drehmomentbegrenzungselement 10 visuell durch die Bohrungen 17 kontrollieren. Beim Anziehen des Spreizankers kann er außerdem das Trennverhalten an den Sollbruchstellen 16 der Scherelemente 14 beobachten. Durch die axiale Durchgangsbohrung 18 kann der Gewindebolzen 4 aus dem Kappendeckel 11 des Drehmomentbegrenzungselements 10 austreten.

## Patentansprüche

1. Drehmomentbegrenzungselement (10) für Spreizanker (3), die eine Spreizhülse (6) und einen mittels einem Gewindebolzen (4) einziehbaren Spreizkörper (5) aufweisen, und wobei am Gewindebolzen (4) ein sich am Befestigungsgegenstand (9) abstützbaren und eine Außenkontur mit Angriffsflächen (12) aufweisendes Gegenlager (7) angeordnet ist, auf das ein kappenartiges, Schlüsselflächen (13) aufweisendes Drehmomentbegrenzungselements (10) zum Aufbringen eines Drehmomentes auf das Gegenlager (7) aufsteckbar ist, wobei das Drehmomentbegrenzungselement (10) in seinem Inneren einstückig ausgeformte Scherelemente (14) mit Sollbruchstellen (16) aufweist, die zur Drehmomentübertragung formschlüssig mit den Angriffsflächen (12) des Gegenlagers (7) in Kontakt sind und bei Erreichen eines vorgegebenen Grenzdrehmoments abscheren, **dadurch gekennzeichnet, dass** die Angriffsflächen (12) des Gegenlagers (7) Umfangsflächen eines Sechskants sind.

2. Drehmomentbegrenzungselement nach Anspruch 1, **dadurch gekennzeichnet, dass** die Scherelemente (14) zylinderförmig ausgebildet sind.

3. Drehmomentbegrenzungselement nach Anspruch 1, **dadurch gekennzeichnet, dass** der Kappendeckel (11) des Drehmomentbegrenzungselements (10) Kontrollbohrungen (17) zur visuellen Kontrolle der Sollbruchstellen (16) aufweist.

4. Drehmomentbegrenzungselement nach Anspruch 1, **dadurch gekennzeichnet, dass** der Kappendeckel (11) des Drehmomentbegrenzungselements (10) eine axiale Durchgangsbohrung (18) aufweist.

## Claims

1. Torque limitation element (10) for expansible anchors (3) which have an expansion sleeve (6) and an expansion body (5) which is arranged to be drawn in by means of a threaded bolt (4), and wherein there is arranged on the threaded bolt (4) an abutment (7) arranged to rest against the article (9) fastened and provided with an outer contour having contact faces (12), over which abutment (7) there can be placed a cap-like torque limitation element (10) having faces (13) for a wrench for applying a torque to the abutment (7), the torque limitation element (10) having on its inside integrally formed shear elements (14) having intended rupture locations (16), which are in interlocking contact with the contact faces (12) of the abutment (7) for the transmission of torque and which shear off when a predetermined limit torque is reached, **characterised in that** the contact faces (12) of the abutment (7) are the peripheral faces of a hexagon.

2. Torque limitation element according to claim 1, **characterised in that** the shear elements (14) are cylindrically shaped.

3. Torque limitation element according to claim 1, **characterised in that** the cap cover (11) of the torque limitation element (10) has inspection holes (17) for visually inspecting the intended rupture locations (16).

4. Torque limitation element according to claim 1, **characterised in that** the cap cover (11) of the torque limitation element (10) has an axial through-hole (18).

## Revendications

1. Elément de limitation de couple (10) pour éléments d'ancrage extensibles (3), qui comprennent une gaine extensible (6) et un corps extensible (5) pouvant être inséré au moyen d'un boulon fileté (4), et une butée (7) pouvant s'appuyer contre l'objet de fixation (9) et comprenant un contour externe à surfaces effectives (12) étant disposée sur le boulon fileté (4), butée sur laquelle peut être monté un élément de limitation de couple (10) du type chapeau, comprenant des pans (13), en vue d'appliquer un couple sur la butée (7), l'élément de limitation de couple (10) comprenant dans sa partie intérieure des éléments de cisaillement (14) formés en une seule pièce avec des points destinés à la rupture (16), qui, en vue de la transmission de couple, sont en contact par engagement positif avec les surfaces effectives (12) de la butée (7) et se détachent lorsqu'un couple limite prédéterminé est atteint, **caractérisé en ce que** les surfaces effectives (12) de la butée (7) sont les surfaces périphériques d'un hexagone.

2. Elément de limitation de couple selon la revendication 1, **caractérisé en ce que** les éléments de cisaillement (14) sont conçus en forme de cylindre.

3. Elément de limitation de couple selon la revendication 1, **caractérisé en ce que** le couvercle de chapeau (11) de l'élément de limitation de couple (10) comprend des alésages de contrôle (17) destinés au contrôle visuel des points destinés à la rupture (16).

4. Elément de limitation de couple selon la revendication 1, **caractérisé en ce que** le couvercle de chapeau (11) de l'élément de limitation de couple (10) comprend un alésage de passage axial (18).
